# EUROPÄISCHE PATENTSCHRIFT

(11) **EP 0 836 030 B1**
(45) Veröffentlichungstag und Bekanntmachung des Hinweises auf die Patenterteilung: **28.08.2002**
(21) Anmeldenummer: 96116252.6
(22) Anmeldetag: 10.10.1996
(51) Int. Cl.: F16D 69/04

(54) **Bremsbelag für Scheibenbremsen sowie Verfahren zu seiner Herstellung**
Disc brake pad and method for its manufacture
Garniture de frein à disque et son procédé de fabrication

(43) Veröffentlichungstag der Anmeldung: 15.04.1998
(73) Patentinhaber: TMD Friction GmbH, 51381 Leverkusen (DE)
(72) Erfinder: Jaworek, Wilfried, Dr., 50996 Köln (DE); Hell, Manfred, 51515 Kürten (DE)
(74) Vertreter: von Kreisler, Alek, Dipl.-Chem.

(56) Entgegenhaltungen:
- EP-A- 0 084 591
- EP-A- 0 254 827
- DE-A- 2 206 852
- DE-A- 2 928 572
- US-A- 4 694 937
- US-A- 4 799 579

## Beschreibung

Die Neuerung betrifft einen Bremsbelag für Scheibenbremsen, insbesondere für Lastkraftwagen, bestehend aus einer ebenen Trägerplatte mit einem aufgepreßten duroplastischen Reibmaterial, wobei die Trägerplatte auf der den Reibbelag tragenden Fläche eine Strukturoberfläche aus kraft- und formschlußbildenden Elementen aufweist, sowie Verfahren zur Herstellung derartiger Bremsbeläge.

Es ist bekannt bei der Herstellung von Bremsbelägen den Reibbelag auf eine Trägerplatte zu pressen und zwischen dem Reibbelag und der Trägerplatte eine Kleberschicht vorzusehen, um die Bindung zwischen Reibmaterial und Trägerplatte zu erhöhen. Diese Bindung hält jedoch bei hochbeanspruchten Bremsen, insbesondere bei Hochleistungs- und Nutzfahrzeugen, den hohen Scherbeanspruchungen nicht stand.
Des weiteren behindert die Kleberschicht die Wärmeleitung, was bei großflächigen Belägen zu unerwünschten Wärmespannungen führt. Das Phänomen der ungleichmäßigen Wärmeverteilung führt generell zur Ablösung der Reibbelagmasse von der Trägerplatte in den Randbereichen oder zentralen Bereichen.

Zur weiteren Haftungserhöhung sind Beläge bekannt, die ein zusätzliches Halterungsbett aufweisen, bzw. mit Elementen versehen sind die Hinterschneidungen auf der den Belag tragenden Fläche bilden, so daß das Reibmaterial sich während des Preßvorganges darin zusätzlich verankert und das Reibmaterial in tangentialer wie in axialer Richtung formschlüssig gehalten wird.

Aus der FR-A-1 392 681 ist bekannt, eine Trägerplatte reibbelagseitig mit einem dünnen Metallgitter zu versehen, das Hohlräume bildet, bzw. eine Käsereibe ähnliche Struktur hat, wobei ein solches Metallgitter auf der Trägerplatte aufgenietet oder aufgeschweißt wird. Das Gitter wird über Punktschweißungen befestigt. Für die Niete muß die Trägerplatte eine entsprechende Anzahl von Durchstellungen aufweisen.

Derartige Gitterbefestigungen sind sehr aufwendig in der Herstellung und Montage, zumal nur wenige Schweißpunkte gleichzeitig gesetzt werden können. Des weiteren wird die Trägerplatte durch das Schweißverfahren thermisch beeinflußt, so daß Verformungen an der Trägerplatte auftreten. Durch eine notwendige Anzahl von Durchstellungen zum Vernieten eines Gitters wird die Trägerplatte in Ihrer Festigkeit geschwächt Haltegitter dieser Art müssen in einem zusätzlichen Arbeitsschritt vorkonfektioniert, d.h. auf Maß zugeschnitten, werden.

Die US-A-3 767 018 beschreibt eine Trägerplatte, die vor dem Aufpressen eines Reibmaterials mit Nieten bestückt wird, die durch die Formgebung des Nietkopfes auf der den Reibbelag tragenden Seite Hinterschneidungen zum Verkrallen des Reibmaterials bilden.
Die Vielzahl der notwendigen Durchstellungen schwächt die Trägerplatte und führt im Stanzprozeß zum Verzug der Trägerplatte.

Aus der EP-A-0 084 591 ist bekannt, die Trägerplatte mittels eines Sinterverfahrens mit einem Haltebett zu versehen. Reibbelagseitig wird auf der Trägerplatte eine Schicht aus nebeneinander liegenden Kügelchen aus Metallpulvergranulaten aufgebracht und diese mittels eines Sinterprozesses auf der Trägerplatte gebunden, wobei sich Hinterschneidungen und Einziehungen bilden, in die das Reibmaterial während des Preßvorgangs hineinfließt.
Aus der US-A-4 799 579 ist bekannt, die Trägerplatte nach einer Reinigung die Trägerplatte mit einem Flußmittel zu benetzen, danach Metallpartikel in Chip- oder Drahtform ungeordnet aufzubringen, ein Kupfer-Zinn-Zink-Gemisch als Bindemittel aufzubringen und die Platte mit den Partikeln in einer oxidationsfreien Zone in einem Ofen zu verlöten, um dann auf der abgekühlten Trägerplatte das Reibmaterial aufzupressen.
Die EP-A- 0 254 827 beschreibt die Aufbringung eines Haltebetts mittels Verflüssigung eines Metalls, das anschließend mit Preßluft in flüssiger Form auf die den Reibbelag tragende Fläche der Trägerplatte aufgespritzt wird, so daß sich bei der Erkaltung eine unregelmäßige Oberflächenstruktur mit Hinterschneidungen ergibt.

Diesen Verfahren ist gemeinsam, daß sie in der Vorbereitung der Trägerplatte aufwendig, nur mit einem hohen Wärmeenergieaufwand möglich sind und komplizierte Anlagen benötigt werden. Aufgrund der Energiekosten sind diese Verfahren unwirtschaftlich. Außer dem Aufsintern von Metallpartikeln haben sich diese Verfahren auf dem Markt nicht durchsetzen können. Des weiteren sind diese Verfahren nur bei metallischen Trägerplatten möglich.

Der Neuerung liegt somit die Aufgabe zugrunde einen Bremsbelag zu schaffen, der höchsten Scherbelastungen standhält, der axialen Belagablösung durch eine gute Wärmeleitung und optimalen Formschluß entgegenwirkt und diese Eigenschaften auf allen Tägerplattenmaterialien ermöglicht, sowie ein Verfahren zu schaffen, das eine wirtschaftliche Fertigung mit geringem Zeit und Kostenaufwand, ohne negative Beeinflussung der Trägerplattenfestigkeit und - ebenheit, ermöglicht.

Die Aufgabe wird erfindungsgemäß dadurch gelöst, daß als kraft- und formschlußbildende Elemente scharfkantige Metallpartikel verwendet werden, die in einer Kleberschicht auf der Trägerplatte gebunden sind und daß nach einer reinigenden Vorbehandlung der Trägerplatte ein Kleber auf die Reibbelagseite der Trägerplatte aufgebracht wird, danach scharfkantige Metallpartikel gleichmäßig in die noch nicht abgebundene Kleberschicht eingestreut werden und nach Abbinden des Klebers das Reibmaterial aufgepreßt wird oder nach einer reinigen Vorbehandlung der Trägerplatte ein mit Metallpartikeln versetzter Kleber auf die den Reibbelag tragenden Seite der Trägerplatte aufgebracht wird und nach Abbinden des Klebers der Reibbelag aufgepreßt wird.

Mit der Erfindung wird eine sichere Befestigung des Reibbelages auf allen denkbaren Trägerplattenwerkstoffen erreicht, als auch ein einfaches und wirtschaftliches Verfahren zur Herstellung derartiger Beläge zur Verfügung gestellt. Die Trägerplatten werden weder durch eine Vielzahl von Durchstellungen noch durch verfahrensbedingte Wärmeeinwirkungen in ihrer Festigkeit und Ebenheit negativ beeinflußt. Gefügeveränderungen in der Trägerplatte können ausgeschlossen werden. Die Hinterschneidungen werden in einfachster Weise mittels der Metallpartikel gebildet.

Vorzugsweise sieht die Erfindung vor, daß die Kleberschicht eine Dicke von 0,2 bis 1,5 mm aufweist, bei der die Partikel eine optimale Bindung erfahren.

Vorzugsweise sieht die Erfindung vor, daß die Metallpartikel eine Siebgröße von 0,25 bis 2,5 mm aufweisen, so daß die Partikel ausreichend in der Kleberschicht verankert sind und ein genügender Teil zur Bildung der Hinterschneidungen hervorsteht.

Vorzugsweise ist vorgesehen, daß die Metallpartikel aus Nichteisenmetallen bestehen, so daß Korrosionseinflüsse, d.h. Unterrostungserscheinungen wie sie bei nichtgeschützten Eisenpartikeln entstehen, vermieden werden.

Vorzugsweise ist vorgesehen, daß die Metallpartikel Messing- und / oder Aluminiumpartikel sind, die sehr gute Korrosionsbeständigkeit bei guter Wärmeleitfähigkeit aufweisen.

Vorzugsweise ist vorgesehen, daß die Kleberschicht aus einem anorganischen Kleber gebildet wird, um eine hochtemperaturfeste Bindung zu bilden.

Im folgenden werden unter Bezugnahme auf die Zeichnung Ausführungsbeispiele näher erläutert.

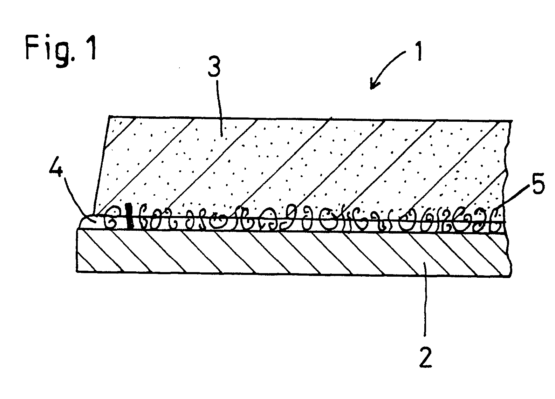

Es zeigt Fig.1 : ein Ausführungsbeispiel einer erfindungsgemäßen Bremsbacke im Schnitt

Die in Fig. 1 im Schnitt dargestellte Bremsbacke 1 besteht im einzelnen aus einer Trägerplatte 2, einem aufgepreßten Reibmaterial 3, das Metallpartikel 5 formschlüssig umbettet, die in einer Kleberschicht 4 auf der Trägerplatte 2 gebunden sind. Die Metallpartikel 5 sind in diesem Fall Metallspäne aus Messing oder Aluminium, bzw. einem Gemisch aus Messing und Aluminiumspänen. Die Späne werden als ganzes oder in gebrochener Form verwendet und bilden mit den gekrümmten Bereichen hervorragende Hinterschneidungen. Die Kleberschicht 4 ist im Verhältnis zu der Spangröße so dünn aufgetragen, daß die Metallpartikel 5 aus der Kleberschicht herausragen, so daß Hinterschneidungen und Vorsprünge gebildet werden, die das Reibmaterial 3 im Preßvorgang ausfüllt Ein Unterrosten wird vermieden, indem als Metallpartikel korrosionsbeständige Messing- und Alumuniumspäne verwendet werden. Die Oberflächen von Stahlträgerplatten werden ohnehin durch Überzüge gegen Korrosion geschützt. Bei Kunststoffträgerplatten erübrigt sich ein Korrosionsschutz der Trägerplatte.

Die Dicke der Kleberschicht 4 beträgt zwischen 0,2 bis 1,5 mm, vorzugsweise liegt die Stärke der Kleberschicht 4 zwischen 0,4 bis 0,7 mm, so daß kleinere Metallpartikel 5 noch herausragen und große Partikel noch eine ausreichende Bindung erfahren. Die mittlere Größe ,d.h. Siebgröße, der scharfkantigen Metallpartikel 5 liegt bei 0,25 bis 2,5 mm, vorzugsweise werden Metallpartikel 5 mit einer Siebgröße von 0,5 bis 1,0 mm verwendet.
Als Metallpartikel 5 werden Drehspäne verwendet, die eine Drillung aufweisen. Derartige Späne weisen allseitig scharfe Kanten auf, so daß die Lage des Partikels nach dem Aufstreuen für die Funktion unerheblich ist. Die Späne werden als ganzes oder in gebrochener Form verwendet.

Die Trägerplatte 2 wird üblicherweise aus Bandmaterial ausgestanzt und vor der weiteren Berabeitung einem Reinigungsprozess unterzogen, wie z.B. Sandstrahlen o.ä.. Anschließend wird eine Kleberschicht 4 aufgewalzt oder aufgesprüht. Darauf werden vor dem Abbinden des Klebers gleichmäßig Metallpartikel 5 aufgestreut. Nach dem Abbinden der Kleberschicht 4 sind die Metallpartikel 5 fest auf der Trägerplatte 2 gebunden. Vorzugsweise kommt ein spezieller anorganischer Kleber auf Wasserglas-Basis zur Verwendung, der eine hitzebeständige Bindung garantiert und leicht zu verarbeiten ist.
Auf die so vorkonfektionierte Trägerplatte 2 wird in einer Preßform das duroplastische Reibmaterial 3 aufgepreßt.

Durch das Ausfüllen der Hinterschneidungen und Vorsprünge werden formschlüssige Verbindungen, die in alle Richtungen wirken, gebildet, so daß zum einen ein Ablösen des Reibmaterials in axialer Richtung erschwert wird und auch tangentiale Scherkräfte aufgefangen werden. Insbesondere bei höheren Temperaturen versagen die üblichen in der Reibbelagindustrie verwendeten Phenolharzkleber häufig.

Den Ablöseerscheinungen in axialer Richtung wird auch durch eine gute Wärmeleitung unter Verwendung von Messing- und / oder Aluminiumspänen entgegengetreten. Die Metallpartikel 5, die zum einen in der Kleberschicht 4 auf die Trägerplatte 2 reichen und zum anderen mit den überstehenden Teilen im Reibmaterial 3 gebunden sind, bilden eine Wärmebrücke , so daß Wärmespannungen und dadurch ausgelöste Ablösungen vermieden werden. Messing- bzw. Aluminiumspäne übertreffen Stahl bezüglich der Wärmeleitung erheblich.

Gemäß einem weiteren Beispiel kann die Kleberschicht 4 in Form einer Mischung aus Kleber und Metallpartikeln 5 auf die Trägerplatte 2 aufgebracht werden. Eine derartige Mischung kann aufgerakelt werden. Während des Abbindeprozesses setzt sich der Kleber, so daß die Metallpartikel 5 um das gewünschte Maß aus der Kleberschicht 4 herausragen.

Die Verfahren werden bei niedrigen Temperaturen durchgeführt, so daß keine Gefügeveränderungen oder der Verzug der Trägerplatte durch Wärmeeinflüsse auftreten. Die Verfahren können im Bereich von 20°C bis 100°C durchgeführt werden. Im oberen Temperaturbereich kann der Abbindeprozess beschleunigt werden.

Durch die relativ geringen Verarbeitungstemperaturen kann auf Kühlzonen verzichtet werden. Die so vorkonfektionierte Trägerplatte 2 ist zügig weiterverarbeitbar.

## Patentansprüche

1. Bremsbelag (1) für Scheibenbremsen, insbesondere für Lastkraftwagen bestehend aus einer ebenen Trägerplatte (2) mit einem aufgepreßten duroplastischen Reibmaterial (3), wobei die Trägerplatte (2) auf der den Reibbelag (3) tragenden Fläche eine Strukturoberfläche aus kraft- und formschlußbildenden Elementen aufweist, **dadurch gekennzeichnet, daß** die kraft- und formschlußbildenden Elemente scharfkantige Metallpartikel (5) sind, die in einer Kleberschicht (4) auf der Trägerplatte (2) gebunden sind.

2. Bremsbelag (1) nach Anspruch 1, **dadurch gekennzeichnet, daß** die Kleberschicht (4) eine Dicke von 0,2 bis 2,5 mm aufweist.

3. Bremsbelag (1) nach Anspruch 1 oder 2, **dadurch gekennzeichnet, daß** die Metallpartikel (5) eine Siebgröße von 0,25 bis 2,5 mm aufweisen.

4. Bremsbelag (1) nach Anspruch 3, **dadurch gekennzeichnet, daß** die scharfkantigen Metallpartikel (5) Metallchips oder Metallspäne sind.

5. Bremsbelag (1) nach Anspruch 4, **dadurch gekennzeichnet, daß** die Metallpartikel (5) aus Nichteisenmetallen bestehen.

6. Bremsbelag (1) nach Anspruch 5 **dadurch gekennzeichnet, daß** die Metallpartikel (5) Messing- und / oder Aluminiumpartikel sind.

7. Bremsbelag (1) nach einem der Ansprüche 1 bis 6 , **dadurch gekennzeichnet, daß** die Kleberschicht (4) aus einem anorganischen Kleber gebildet wird.

8. Verfahren zur Herstellung eines Bremsbelages (1) nach einem der Ansprüche 1 bis 7, **dadurch gekennzeichnet, daß** nach einer reinigenden Vorbehandlung der Trägerplatte (2) ein Kleber auf die Reibbelagseite der Trägerplatte (2) aufgebracht wird, danach scharfkantige Metallpartikel (5) gleichmäßig in die noch nicht abgebundene Kleberschicht (4) eingestreut werden und nach Abbinden des Klebers das Reibmaterial (3) aufgepreßt wird.

9. Verfahren zur Herstellung eines Bremsbelages (1) nach einem der Ansprüche 1 bis 7, **dadurch gekennzeichnet, daß** nach einer reinigenden Vorbehandlung der Trägerplatte (2) ein mit Metallpartikeln (5) versetzter Kleber auf die Trägerplatte (2) aufgebracht wird und nach Abbinden des Klebers der Reibmaterial (3) aufgepreßt wird.

## Claims

1. Brake lining (1) for disc brakes, in particular for trucks, comprising a planar support plate (2) with a pressed-on duroplastic friction material (3), the support plate (2) having its surface supporting the friction lining (3) provided with a structured surface of positively and negatively engaging elements, **characterized in that** the positively and negatively engaging elements are sharp-edged metal particles (5) bound on the support plate (2) in an adhesive layer (4).

2. The brake lining (1) of claim 1, **characterized in that** the adhesive layer (4) has a thickness of 0.2 to 2.5 mm.

3. The brake lining (1) of claim 1, **characterized in that** the metal particles (5) have a screen size from 0.25 to 2.5 mm.

4. The brake lining (1) of claim 3, **characterized in that** the sharp-edged metal particles (5) are metal chips or metal flakes.

5. The brake lining (1) of claim 4, **characterized in that** the metal particles (5) are from nonferrous metals.

6. The brake lining (1) of claim 5, **characterized in that** the metal particles (5) are brass and/or aluminum particles.

7. The brake lining (1) of one of claims 1 to 6, **characterized in that** the adhesive layer (4) is formed by an inorganic adhesive.

8. Method for producing a brake lining (1) of one of claims 1 to 7, **characterized in that**, subsequent to a cleaning pre-treatment of the support plate (2), an adhesive is applied on the friction lining side of the support plate (2), then sharp-edged metal particles (5) are strewn uniformly onto the yet uncured adhesive layer (4), and the friction material (3) is pressed on after the adhesive has cured.

9. The method for producing a brake lining (1) according to one of claims 1 to 7, **characterized in that** subsequent to a cleaning pre-treatment of the support plate (2), an adhesive mixed with sharp-edged metal particles (5) is applied onto the support plate (2) and the friction material (3) is pressed on after the adhesive has cured.

## Revendications

1. Garniture de frein (1) pour freins à disque, en particulier pour camions, se composant d'une plaque support (2) plane sur laquelle est pressé un matériau de friction (3) thermodurcissable, la plaque support (2) présentant sur la face portant la garniture de friction (3) une surface structurale composée d'éléments établissant des liaisons par adhérence et par la forme, **caractérisée en ce que** les éléments établissant des liaisons par adhérence et par la forme sont constitués de particules métalliques à arêtes vives (5), qui sont liées dans une couche de colle (4) sur la plaque support (2).

2. Garniture de frein (1) selon la revendication 1, **caractérisée en ce que** la couche de colle (4) présente une épaisseur de 0,2 à 2,5 mm.

3. Garniture de frein (1) selon la revendication 1 ou 2, **caractérisée en ce que** les particules métalliques (5) présentent une taille de tamis de 0,25 à 2,25 mm.

4. Garniture de frein (1) selon la revendication 3, **caractérisée en ce que** les particules métalliques à arêtes vives (5) sont constituées de pastilles métalliques ou de copeaux métalliques.

5. Garniture de frein (1) selon la revendication 4, **caractérisée en ce que** les particules métalliques (5) se composent de métaux non ferreux.

6. Garniture de frein (1) selon la revendication 5, **caractérisée en ce que** les particules métalliques (5) sont des particules de laiton et/ou d'aluminium.

7. Garniture de frein (1) selon l'une des revendications 1 à 6, **caractérisée en ce que** la couche de colle (4) est formée d'une colle minérale.

8. Procédé de fabrication d'une garniture de frein (1) selon l'une des revendications 1 à 7, **caractérisé en ce que**, après un traitement préalable de nettoyage de la plaque support (2), de la colle est mise en place sur la face de la plaque support (2) tournée vers la garniture de friction, qu'ensuite des particules métalliques à arêtes vives (5) sont répandues régulièrement dans la couche de colle (4) qui n'a pas encore durci et, qu'après durcissement de la colle, le matériau de friction (3) est mis en place par pression.

9. Procédé de fabrication d'une garniture de frein (1) selon l'une des revendications 1 à 7, **caractérisé en ce que**, après un traitement préalable de nettoyage de la plaque support (2), de la colle mélangée à des particules métalliques (5) est mise en place sur la plaque support (2) et, qu'après durcissement de la colle, le matériau de friction (3) est mis en place par pression.
